# EUROPÄISCHE PATENTSCHRIFT

(11) **EP 0 556 420 B1**
(45) Veröffentlichungstag und Bekanntmachung des Hinweises auf die Patenterteilung: **18.10.1995**
(21) Anmeldenummer: 92102637.3
(22) Anmeldetag: 18.02.1992
(51) Int. Cl.: B60J 7/057

(54) **Kurbelantrieb für ein verstellbares Teil eines Fahrzeugdaches**
Actuating lever for movable part of a vehicle roof
Manuelle d'entraînement pour partie mobile d'un toit de véhicule

(43) Veröffentlichungstag der Anmeldung: 25.08.1993
(73) Patentinhaber: WEBASTO KAROSSERIESYSTEME GmbH, D-82131 Stockdorf (DE)
(72) Erfinder: Alfonso, Lelio, Dr., Torino (IT)
(74) Vertreter: Wiese, Gerhard

(56) Entgegenhaltungen:
- EP-A- 0 155 410
- DE-A- 2 426 765
- DE-A- 2 657 850

## Beschreibung

Die Erfindung bezieht sich auf einen Kurbelantrieb für ein über einen Antriebsmechanismus verstellbares Teil eines Fahrzeugdaches, mit einem Kurbelarm, der an einer drehbaren Nabe zwischen einer Arbeitsstellung und einer Ruhestellung verschwenkbar gelagert ist und ein Betätigungselement trägt, das in der Ruhestellung des Kurbelarms in eine dachfeste Versenknische eintaucht, wobei die Nabe mit einer einen Teil des Antriebsmechanismus bildenden Antriebswelle über eine in Abhängigkeit von der Schwenkstellung des Kurbelarms betätigte Schaltkupplung verbunden ist, die sowohl in der Arbeitsstellung als auch in der Ruhestellung des Kurbelarms eine drehfeste Verbindung zwischen der Nabe und der Antriebswelle herstellt und die die Antriebsverbindung zwischen der Nabe und der Antriebswelle unterbricht, wenn der Kurbelarm in eine Freigabestellung gebracht wird.

Bei einem bekannten Kurbelantrieb dieser Art (DE-A-24 26 765) weist die Schaltkupplung eine im unteren Endabschnitt der Antriebswelle ausgebildete Innenverzahnung und eine Außenverzahnung auf, die am oberen Endteil eines mit der Nabe drehfest verbundenen, mit Bezug auf die Nabe jedoch axial verschiebbaren Stifts angeordnet ist. Der Stift ist in Richtung auf einen gegenseitigen Eingriff von Innen- und Außenverzahnung federnd vorgespannt, und er läßt sich durch Verschwenken des Kurbelarms entgegen der Federvorspannkraft nach unten in eine Stellung ziehen, in welcher die Außenverzahnung außer Eingriff mit der Innenverzahnung kommt und dadurch die Schaltkupplung ausgerückt ist. Nach Ausrücken der Schaltkupplung lassen sich Nabe und Kurbelarm unabhängig von der jeweiligen Stellung des verstellbaren Teils des Fahrzeugdaches in eine solche Lage bringen, daß das Betätigungselement des Kurbelarms in die dachfeste Versenknische eintauchen kann.

Um bei dem bekannten Kurbelantrieb den die Außenverzahnung tragenden Stift nach unten zu ziehen und dadurch die Schaltkupplung auszurücken, muß der Kurbelarm ausgehend von seiner Arbeitsstellung in die Freigabestellung in einer Richtung verschwenkt werden, die der Richtung des Verschwenkens in die Ruhestellung entgegengesetzt ist. Nachdem dann der Kurbelarm in eine der Versenknische diametral gegenüberliegende Stellung gebracht ist, wird er ausgehend von der Freigabestellung unter Durchlaufen der Arbeitsstellung in die Ruhestellung verschwenkt. Bei dem bekannten Kurbelantrieb ist daher die Betätigung relativ umständlich und wenig sinnfällig. Weil der Kurbelarm für ein Einklappen in die Versenknische ausgehend von der Arbeitsstellung zunächst in umgekehrter Richtung verschwenkt und dann in eine Drehstellung gebracht werden muß, in welcher das Betätigungselement des Kurbelarms der Versenknische diametral gegenüberliegt, ist zur Betätigung eine erhebliche Aufmerksamkeit des Fahrers notwendig. Der Fahrer wird vom Geschehen auf der Fahrbahn leicht abgelenkt. Des weiteren ist bei dem bekannten Kurbelantrieb die Gefahr relativ hoch, daß die Schaltkupplung beim Verschwenken des Kurbelarms von der Freigabestellung in Richtung auf die Ruhestellung hängenbleibt, weil sich die Außenverzahnung des axial verstellbaren Stiftes in die Innenverzahnung der Welle nur einlegen kann, wenn beide Verzahnungen in Drehrichtung genau miteinander ausgerichtet sind.

Ein unmittelbarer Übergang des Kurbelarms von der Arbeitsstellung in die Ruhestellung ist bei einem anderen bekannten Kurbelantrieb möglich (DE-A-26 57 850), bei dem zwischen dem Kurbelarm und der Antriebswelle oder zwischen der Antriebswelle und dem Antriebsritzel eine Freilaufeinrichtung angeordnet ist, die eine freie Drehung des Kurbelarms um 36O° ermöglicht, wobei eine Arretiervorrichtung bei eingeklapptem Kurbelarm die Freilaufeinrichtung sperrt und eine Drehung des Antriebsritzels verhindert. Wenn bei diesem Kurbelantrieb der Kurbelarm aus der Ruhestellung in die Arbeitsstellung verschwenkt wird, um das verstellbare Teil des Fahrzeugdaches in eine andere Position zu bringen, kann eine Leerdrehung des Kurbelarms von bis zu 360° notwendig sein, bevor die Antriebsverbindung zwischen dem Kurbelarm und der Antriebswelle hergestellt ist. Dadurch wird der Betätigungsweg des Kurbelarms in unerwünschter Weise verlängert.

Des weiteren ist ein Kurbelantrieb bekannt (EP-A-0 155 410), bei dem an einer Nabe ein Kupplungshebel einer Schaltkupplung schwenkbar gelagert ist, wobei der Kupplungshebel in eine der ausgerückten Stellung der Schaltkupplung entsprechende Lage vorgespannt ist. Zu der Schaltkupplung gehört ferner eine Außenverzahnung einer Abtriebswelle zum Antrieb eines verstellbaren Teils eines Fahrzeugdachs. Mit dem Kupplungshebel wirkt ein zwischen einer Arbeitsstellung und einer Ruhestellung verschwenkbarer Kurbelarm zusammen. In der Ruhestellung des Kurbelarms ist der Kupplungshebel freigegeben, so daß er unter der Wirkung der Federvorspannung außer Eingriff mit der Verzahnung der Antriebswelle gehalten wird. Steht der Kurbelarm dagegen in seiner Arbeitsstellung, drückt der Kurbelarm den Kupplungshebel entgegen der Federvorspannkraft in Eingriff mit der Verzahnung der Antriebswelle, wodurch die drehfeste Verbindung zwischen dem Kurbelarm und der Antriebswelle hergestellt wird. Dieser Kurbelantrieb läßt sich zwar relativ einfach und sinnfällig betätigen, hat aber den Nachteil, daß bei in Ruhestellung stehendem Kurbelarm die Antriebswelle von der Nabe entkuppelt ist. Infolgedessen besteht die Gefahr, daß sich das verstellbare Teil des Fahrzeugdachs in der Ruhestellung des Kurbelarms unter dem Einfluß äußerer Einwirkungen, beispielsweise dem Winddruck, in unerwünschter Weise verstellt.

Der im Anspruch 1 angegebenen Erfindung liegt die Aufgabe zugrunde, einen Kurbelantrieb zu schaffen, der einerseits einfach und sinnfällig betätigt werden kann, bei dem aber andererseits das verstellbare Teil des Fahrzeugdachs selbsttätig blokkiert wird, wenn der Kurbelarm in seine Ruhestellung gebracht wird.

Ausgehend von einem Kurbelantrieb der eingangs genannten Art wird diese Aufgabe erfindungsgemäß dadurch gelöst, daß die Schaltkupplung ein sowohl Dreh- als auch Schwenkbewegungen des Kurbelarms mitmachendes Kupplungselement aufweist, das sich in der Arbeitsstellung und in der Ruhestellung des Kurbelarms in eine Verzahnung der Antriebswelle oder eines mit der Antriebswelle verbundenen Mitnehmers einlegt und das in Zwischenstellungen des Kurbelarms im Schwenkbereich zwischen der Arbeitsstellung und der Ruhestellung von der Verzahnung freikommt.

Bei dem Kurbelantrieb nach der Erfindung sind die Antriebswelle und die aus Kurbelarm und Nabe bestehende Einheit sowohl in der Arbeitsstellung als auch in der Ruhestellung des Kurbelarms drehfest miteinander verbunden. Da bei in Ruhestellung stehendem Kurbelarm dessen Betätigungselement in die dachfeste Versenknische eintaucht und infolgedessen Kurbelarm und Nabe gegen unbeabsichtigtes Drehen gehindert sind, wird über die eingerückte Schaltkupplung das verstellbare Dachteil gegen urkontrollierte Bewegungen unter dem Einfluß äußerer Einwirkungen, beispielsweise dem Winddruck, gesichert. Die Freigabestellung, in welcher sich der Kurbelarm zum Ausrichten mit der gegenüber der Antriebswelle drehen läßt, liegt im Schwenkbereich des Kurbelarms zwischen Ruhe- und Arbeitsstellung. Infolgedessen braucht der Kurbelarm ausgehend von der Ruhestellung nicht zunächst in entgegengesetzter Richtung verschwenkt zu werden. Eine Freilaufkupplung ist vermieden, so daß beim Verstellen des Dachteils keine Leerbewegung des Kurbelarms ausgeführt zu werden braucht.

Weitere Ausgestaltungen der Erfindung ergeben sich aus den Unteransprüchen.

Ein konstruktiv besonders einfacher Aufbau des Kurbelantriebs wird erhalten, wenn das Kupplungselement im Bereich seines einen Endes einen ersten Kupplungszahn und im Bereich seines anderen Endes einen zweiten Kupplungszahn aufweist, von denen der eine in der Arbeitsstellung und der andere in der Ruhestellung des Kupplungsarms mit der Verzahnung zusammenwirken. Dabei ist die Anordnung zweckmäßig so getroffen, daß beim Verschwenken des Kurbelarms in die betreffende Stellung (Ruhestellung oder Arbeitsstellung) der eine Kupplungszahn von der einen Stirnseite und/oder der Umfangsseite der Verzahnung her und der andere Kupplungszahn von der anderen Stirnseite oder der Umfangsseite der Verzahnung her in die Verzahnung eintauchen.

Der Kurbelarm und das Kupplungselement sind zweckmäßig um eine gemeinsame Achse mit Bezug auf die Nabe verschwenkbar, so daß ein und dasselbe Lagerelement, z.B. eine Schwenkwelle, sowohl zur Lagerung des Kurbelarms als auch zur Lagerung des Kupplungselements genutzt werden kann.

Vorzugsweise sind die Kupplungszähne und/oder die Zähne der Verzahnung jeweils an ihrem einlaufseitigen Ende schneidenartig ausgebildet. Dadurch wird die Gefahr eines Hängenbleibens beim Betätigen der Schaltkupplung minimiert.

Das Betätigen des Kurbeltriebs wird weiter vereinfacht, wenn eine mit dem Kurbelarm zusammenwirkende Federvorspanneinrichtung vorgesehen ist, die, nachdem der Kurbelarm in der einen Schwenkrichtung über einen Totpunkt hinaus verschwenkt ist, den Kurbelarm in Richtung auf die Arbeitsstellung federnd vorspannt und die, nachdem der Kurbelarm in der anderen Schwenkrichtung über den Totpunkt hinaus verschwenkt ist, den Kurbelarm in Richtung auf die Ruhestellung federnd vorspannt. Dabei kann die Federvorspanneinrichtung einfach eine an der Nabe abgestützte Blattfeder aufweisen, die sich selbst oder über ein Zwischenglied gegen eine Nockenbahn des Kurbelarms anlegt und die in der Totpunktstellung des Kurbelarms gegenüber ihrer entspannten Lage maximal ausgelenkt ist.

Um ein versehentliches Umklappen des Kurbelarms während des Drehens der Kurbel auszuschließen, ist vorzugsweise eine Arretiereinrichtung vorgesehen, welche den Kurbelarm in der Arbeitsstellung arretiert. Dabei ist die Arretiereinrichtung zweckmäßig mittels eines nahe dem freien Ende des Kurbelarms angeordneten und damit beim Betätigen des Kurbelarms leicht erreichbaren Freigabehebels lösbar. Die Arretiereinrichtung kann mindestens einen an dem Kurbelarm verstellbar gelagerten Schieber aufweisen, der in eine Stellung federnd vorgespannt ist, in welcher er ein Verschwenken des in die Arbeitsstellung gebrachten Kurbelarms gegenüber der Nabe verhindert, und der mittels des Freigabehebels entgegen der Federvorspannkraft in eine ein Verschwenken des Kurbelarms erlaubende Stellung verstellbar ist.

Ein Ausführungsbeispiel des Kurbelantriebs nach der Erfindung ist nachstehend anhand der Zeichnungen näher erläutert.

Ein Ausführungsbeispiel der Erfindung ist im folgenden unter Bezugnahme auf die Zeichnungen beschrieben. Es zeigen:
Fig. 1 eine Draufsicht auf den Kurbelantrieb unter Weglassung der Antriebswelle und des Antriebsritzels,
Fig. 2 den Schnitt entlang der Linie II-II der Fig. 1,
Fig. 3 den Schnitt entlang der Linie III-III der Fig. 1,
Fig. 4 den Schnitt entlang der Linie IV-IV der Fig. 1,
Fig. 5 den Schnitt entlang der Linie V-V der Fig. 1,
Fig. 6 eine Ansicht des Kurbelantriebs von unten,
Fig. 7 einen Schnitt entsprechend Fig. 2 mit in die Ruhestellung geklapptem Kurbelarm,
Fig. 8 den Schnitt entlang der Linie VIII-VIII der Fig. 3,
Fig. 9 den Schnitt entlang der Linie IX-IX der Fig. 3 sowie
Fign.10, 11 und 12 schematische Längsschnitte durch ein Schiebehebedach mit in unterschiedlichen Stellungen stehendem Deckel.

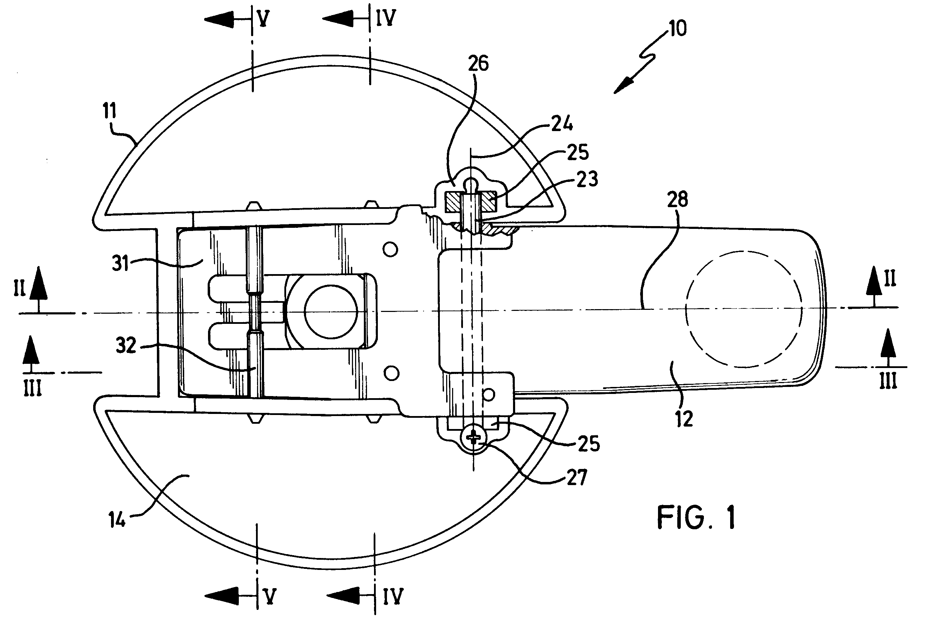

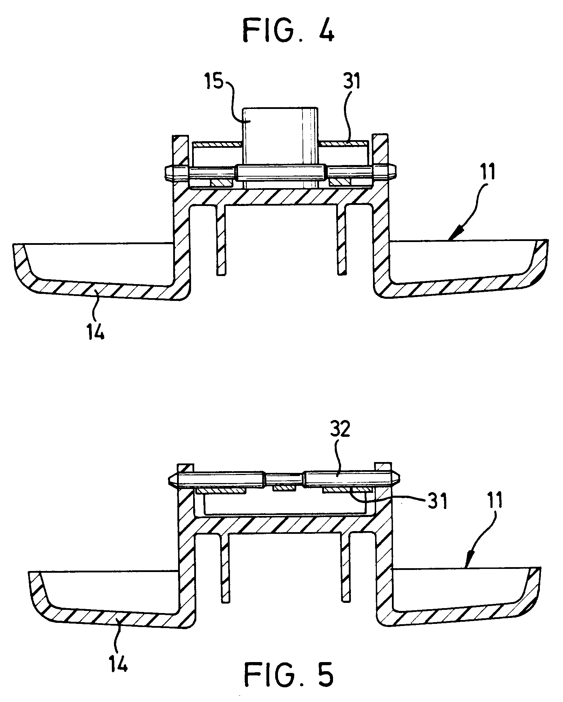

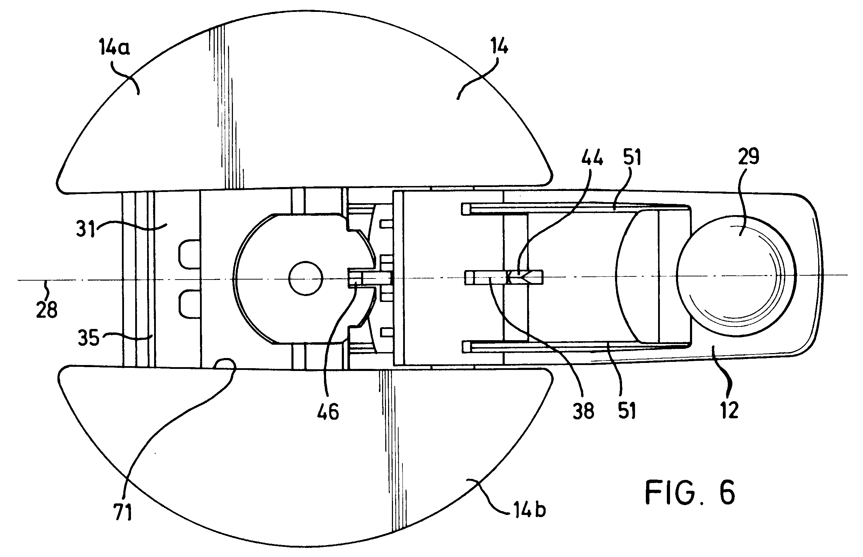

Der in den Fign. 1 - 9 dargestellte Kurbelantrieb 10 weist eine Kurbel mit einer drehbaren Nabe 11 und einem Kurbelarm 12 auf. Die Nabe 11 ist um eine Achse 13 drehbar, aber in Richtung der Achse 13 unverschiebbar gelagert. Die Nabe 11 weist für diesen Zweck einen an einem Teller 14 angeformten Hals 15 auf, in welchen der untere Teil einer Antriebswelle 16 eingesteckt ist. Ein unterer Abschnitt 17 der Antriebswelle 16 trägt eine Außerkerbverzahnung, die mit einer Innenkerbverzahnung eines Ritzels 18 in Eingriff steht, wodurch für eine drehfeste gegenseitige Verbindung von Antriebswelle 16 und Ritzel 18 gesorgt ist. Das Ritzel 18 sitzt in einer an den Hals 15 nach unten anschließenden und mit Bezug auf den Hals erweiterten Kammer 19 der Nabe 11. Die Kammer 19 ist nach unten mittels eines aufgeklipsten Deckels 20 abgedeckt. Eine Unterlegscheibe 21 legt sich gegen das untere stirnseitige Ende der Antriebswelle 16 und den radial angrenzenden Teil des Ritzels 18 an. Durch die Unterlegscheibe 21 ist eine Schraube 22 gesteckt, die in ein zur Achse 13 koaxiales Innengewinde der Antriebswelle 16 eingreift, wodurch die Nabe 11 mit der Antriebswelle 16 lösbar verbunden wird.

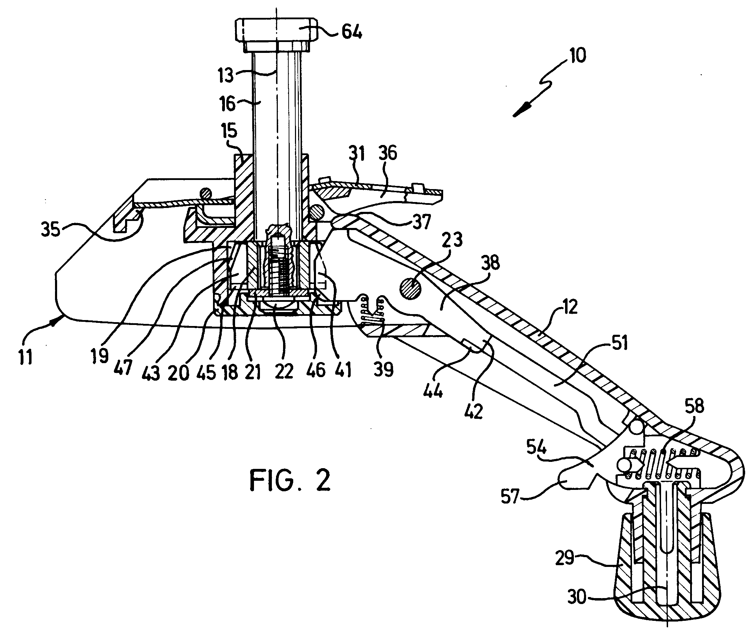

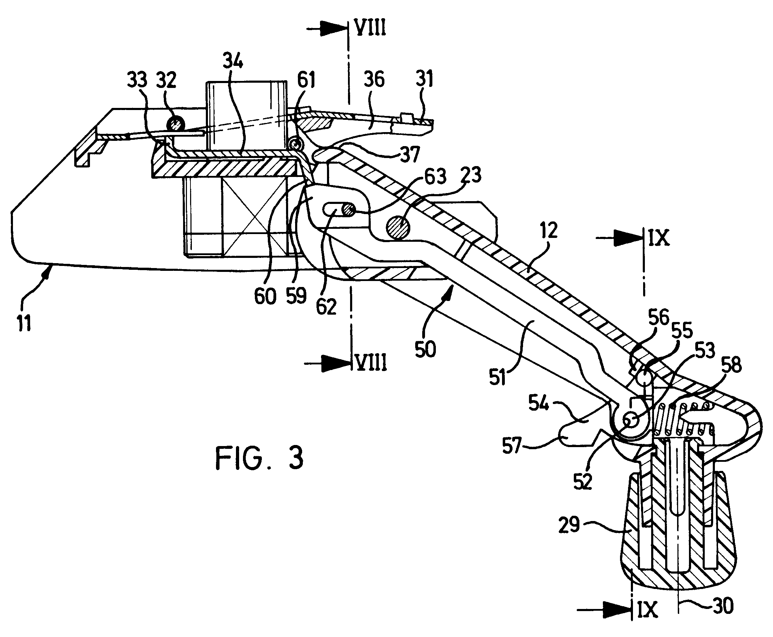

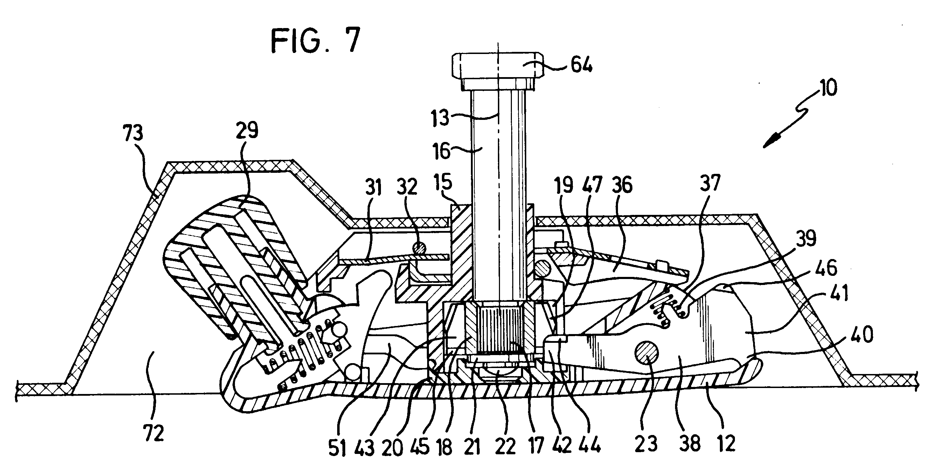

Der Kurbelarm 12 ist mit der Nabe 11 über eine Gelenkwelle 23 verbunden, und er kann gegenüber der Nabe um eine von der Gelenkwelle 23 bestimmte Schwenkachse 24 zwischen einer Arbeitsstellung (Fign. 2 und 3) und einer Ruhestellung ( Fig. 7) verschwenkt werden. Die Gelenkwelle 23 ist in zwei Schwenklagern 25 drehbar gelagert, die in an der Nabe 11 angeformte Lageraufnahmen 26 eingesetzt und mittels jeweils einer Schraube 27 gehalten sind (Fig. 1). Die Anordnung ist insgesamt symmetrisch mit Bezug auf eine Längssymmetrielinie 28, die mit der Schnittlinie II-II der Fig. 1 zusammenfällt. Der Kurbelarm 12 trägt an dem von der Gelenkwelle 23 abliegenden Ende einen Kurbelknopf 29, der in der Arbeitsstellung des Kurbelarms 12 mit Bezug auf den letzteren um eine Achse 30 drehbar ist, die zweckmäßig ebenso wie die Achse 13 lotrecht verläuft.

Eine Blattfeder 31 ist zwischen einen mit der Nabe 11 fest verbundenen Federanlagestift 32 und ein hochstehendes Ende 33 eines Arretierwinkels 34 geschoben; sie liegt mit ihrem einen, in den Fign. 1, 2, 3, 6 und 7 linken Ende auf einem an der Nabe 11 angeformten Absatz 35 auf. Die Blattfeder 31 umgreift den Hals 15, und sie trägt an der von dem Absatz 35 abliegenden Seite des Halses 15 an ihrer Unterseite zwei Nocken 36. Die Nocken 36 werden von der Blattfeder 31 gegen Nockenbahnen 37 angepreßt, die an beiden Seiten des von dem Kurbelknopf 29 abliegenden Endes des Kurbelarms 12 ausgebildet sind. Die Nocken 36 und die damit zusammenwirkenden Nockenbahnen 37 sind derart ausgebildet und angeordnet, daß die Blattfeder 31 in einer zwischen der Arbeitsstellung und der Ruhestellung des Kurbelarms liegenden Totpunktstellung gegenüber ihrer entspannten Lage maximal ausgelenkt ist. Nachdem daher der Kurbelarm 12 in der einen Schwenkrichtung über die Totpunktstellung hinaus verschwenkt ist, wird er von der Blattfeder 31 in Richtung auf die Arbeitsstellung vorgespannt. Ist dagegen der Kurbelarm in der anderen Schwenkrichtung über die Totpunktstellung hinaus verschwenkt, bewirkt die Blattfeder 31 ein Vorspannen des Kurbelarms 12 in Richtung auf die Ruhestellung.

Auf der Gelenkwelle 23 ist ein Kupplungshebel 38 drehbar gelagert, der zusammen mit dem Ritzel 18 eine Schaltkupplung bildet, die in Abhängigkeit von der Schwenkstellung des Kurbelarms 12 für eine drehfeste Verbindung zwischen der Nabe 11 und der Antriebswelle 16 sorgt oder eine solche drehfeste Verbindung unterbricht. Der Kupplungshebel 38 ist mittels einer Feder 39 in den Fign. 2 und 7 im Uhrzeigersinn mit Bezug auf den Kurbelarm 12 vorgespannt. Die Schwenkbewegung des Kupplungshebels 38 wird durch Anlage einer Nase 40 des Kupplungshebels an der dieser Nase zugewendeten Seite des Kurbelarms 12 begrenzt. Der Kupplungshebel 38 macht sowohl Schwenkbewegungen des Kurbelarms 12 um die von der Gelenkwelle 23 bestimmte Schwenkachse 24, als auch Drehbewegungen des Kurbelarms 12 und der Nabe 11 um die Achse 13 mit. Der Kupplungshebel 38 weist im Bereich seines einen Endes einen ersten Kupplungszahn 41 und im Bereich seines anderen Endes einen zweiten Kupplungszahn 42 auf. In der in Fig. 2 veranschaulichten Arbeitsstellung des Kurbelarms 12 legt sich der erste Kupplungszahn 41 zwischen zwei Zähne einer Verzahnung 43 am Außenumfang des Ritzels 18. Steht der Kurbelarm 12 dagegen in der in Fig. 7 dargestellten Ruhestellung, legt sich der zweite Kupplungszahn 42 des Kupplungshebels 38 in die Verzahnung 43 des Ritzels 18 ein. Sowohl in der Arbeitsstellung als auch in der Ruhestellung des Kurbelarms 12 ist daher für eine drehfeste Verbindung zwischen der Nabe 11 und der Antriebswelle 16 gesorgt.

In Zwischenstellungen des Kurbelarms 12 zwischen der Arbeitsstellung (Fig. 2) und der Ruhestellung (Fig. 7) sind dagegen beide Kupplungszähne 41 und 42 des Kupplungshebels 38 außer Eingriff mit der Verzahnung 43 des Ritzels 18. In diesen Zwischenstellungen kann daher der Kurbelarm 12 zusammen mit der Nabe 11 um die Achse 13 frei gedreht werden, ohne daß dabei die Antriebswelle 16 mitgenommen wird.

Bei der veranschaulichten Ausführungsform ist die Auslegung so getroffen, daß bei Annäherung des Kurbelarms 12 an die Ruhestellung (Fig. 7) sich der Kupplungshebel 38 mit seinem den Kupplungszahn 42 tragenden Ende dem Ritzel 18 von dessen einer (unterer) Stirnseite aus nähert. Sollte dabei der Kupplungshebel 38 zunächst nicht in eine Zahnlücke, sondern auf die Stirnfläche eines Zahns des Ritzels 18 treffen, kann der Kupplungshebel 38 durch Schwenken um die Gelenkwelle 23 entgegen der Kraft der Feder 39 ausweichen. Bei geringfügiger weiterer Drehung der Nabe 11 gleitet dann der Kupplungszahn 42 in die nächste Zahnlücke der Verzahnung 43 ein. Um dieses Eintauchen zu begünstigen, sind sowohl der Kupplungszahn 42 als auch die Zähne der Verzahnung 43 an ihrem einlaufseitigen Ende, das heißt dort, wo sich der Kupplungszahn 42 zwischen die Zähne der Verzahnung 43 zu legen sucht, wenn der Kurbelarm 12 in die Ruhestellung gebracht wird, schneidenartig ausgebildet, wie dies in den Fign. 2, 6 und 7 bei 44 bzw. 45 angedeutet ist.

Nähert sich der Kurbelarm 12 umgekehrt seiner Arbeitsstellung, legt sich der Kupplungszahn 41 seitlich und von oben zwischen die Zähne der Verzahnung 43, wobei auch in diesem Fall das Eintauchen durch schneidenartige Ausbildung der betreffenden einlaufseitigen Enden des Kupplungszahns 41 und der Zähne der Verzahnung 43 begünstigt wird. Die entsprechenden Schneiden sind in den Fign. 2, 6 und 7 bei 46 bzw. bei 47 zu erkennen.

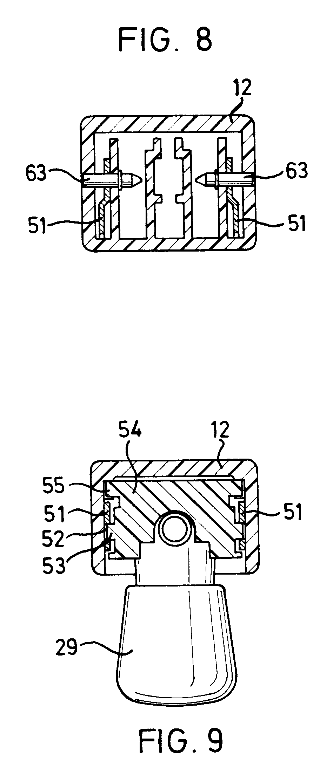

Der veranschaulichte Kurbelantrieb ist ferner mit einer insgesamt mit 50 bezeichneten lösbaren Arretiereinrichtung versehen, die den Kurbelarm 12 in seiner Arbeitsstellung selbsttätig arretiert und deren Einzelteile insbesondere in den Fign. 3, 8 und 9 zu erkennen sind. Zu der Arretiereinrichtung 50 gehören zwei bezüglich der Längssymmetrielinie 28 seitlich versetzt angeordnete Schieber 51. Das jeweils eine Ende der Schieber 51 ist mit einer Öffnung 52 versehen, in die ein stiftförmiger Ansatz 53 eines Freigabehebels 54 eingreift. Der Freigabehebel 54 ist über weitere zylindrische Ansätze 55 in am Kurbelarm 12 angeformten Lagerböcken 56 schwenkbar gelagert. Der Freigabehebel 54 trägt an dem von den Ansätzen 55 abliegenden Ende eine Handhabe 57, die so angeordnet ist, daß sie bei Betätigung der Kurbel über den Kurbelknopf 29 bequem gefaßt werden kann. Eine sich am Kurbelarm 12 abstützende Feder 58 spannt den Freigabehebel 54 und damit die Schieber 51 in die in Fig. 3 veranschaulichte Stellung vor. In dieser Stellung sitzt das von dem Freigabehebel 54 abliegende Ende 59 auf einem abgewinkelten Steg 60 des Arretierwinkels 34 auf, der sich seinerseits an einem mit der Nabe 11 fest verbundenen Anlagestift 61 abstützt. In dem Ende 59 der Schieber 51 ist ein Langloch 62 ausgebildet. In die Langlöcher 62 greift jeweils ein in den Kurbelarm 12 eingesetzter Stift 63 ein (Fign. 3 und 8). Wird der Freigabehebel 54 mittels der Handhabe 57 entgegen der Kraft der Feder 58 in Richtung auf den Kurbelknopf 29 verschwenkt, verlagert sich das Ende 59 der beiden Schieber 51 in Fig. 3 nach rechts, wodurch die Schieber 51 von dem Arretierwinkel 34 freikommen. Der Kurbelarm 12 kann jetzt in Richtung auf seine Ruhestellung verschwenkt werden.

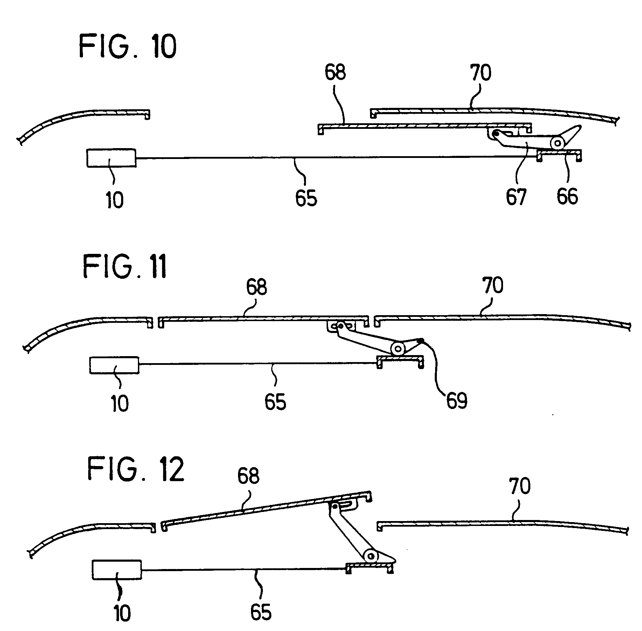

Mit der Antriebswelle 16 ist ein Antriebsritzel 64 drehfest verbunden. Das Antriebsritzel 64 kann in bekannter Weise mit zwei drucksteifen Antriebskabeln 65 in Eingriff stehen. Diese Antriebskabel können beispielsweise in der in den Fign. 10 bis 12 angedeuteten Weise mit einer Transportbrücke 66 verbunden sein, die einen Hebelmechanismus 67 trägt, der einerseits mit dem Deckel 68 eines Schiebehebedaches verbunden und andererseits bei 69 in einer nicht gezeigten Kulissenführung geführt ist. Durch Betätigen des Kurbelantriebs 10 kann der Deckel 68 über die Antriebskabel 65 ausgehend von der in Fig. 11 dargestellten Schließstellung wahlweise nach hinten unter ein festes Dachteil 70 geschoben (Fig. 10) oder in die in Fig. 12 veranschaulichte Lüftungsstellung ausgestellt werden.

Zur Erläuterung der Wirkungsweise des Kurbelantriebs 10 sei angenommen, daß sich der Deckel 68 in der voll zurückgeschobenen Stellung gemäß Fig. 10 befindet und der Kurbelarm 12 seine Ruhestellung gemäß Fig. 7 einnimmt . In dieser Ruhestellung taucht der Kurbelarm 12 in einen in der Nabe 11 ausgebildeten Querschlitz 71 ein, welcher den Teller 14 in zwei Kreissegmente 14a und 14b unterteilt. Gleichzeitig legt sich der Kurbelknopf 29 in eine Versenknische 72 ein, die in einer dachfesten Verkleidung 73 ausgebildet ist. Durch den gegenseitigen Eingriff von Kurbelknopf 29 und Versenknische 72 sind der Kurbelarm 12 und die Nabe 11 gegen Verdrehen um die Achse 13 gesichert. Die Blattfeder 31 hält den Kurbelarm 12 in der eingeklappten Ruhestellung. Der Kupplungszahn 42 des Kupplungshebels 38 greift in die Verzahnung 43 des Ritzels 18 ein. Dadurch werden das Ritzel 18, die Antriebswelle 16 und der damit gekoppelte Deckel 68 gegen unerwünschte Bewegungen gesichert.

Soll der Deckel 68 aus der Stellung der Fig. 10 beispielsweise in die Schließstellung gemäß Fig. 11 gebracht werden, werden der Kurbelarm 12 und mit ihm der Kupplungshebel 38 um die Gelenkwelle 23 aus der Ruhestellung der Fig. 7 in die Arbeitsstellung gemäß den Fign. 2 und 3 verschwenkt. Im anfänglichen Teil dieser Verschwenkbewegung kommt der Kupplungszahn 42 von der Verzahnung 43 frei. Gegen Ende der Schwenkbewegung des Kurbelarms 12 taucht der Kupplungszahn 41 des Kupplungshebels 38 in die Verzahnung 43 des Ritzels 18 ein, wodurch wieder eine drehfeste Verbindung zwischen der aus Nabe 11 und Kurbelarm 12 bestehenden Einheit und der Antriebswelle 16 hergestellt ist. Die Blattfeder 31 hält den Kurbelarm 12 in der Arbeitsstellung fest. Die Arretiereinrichtung 50 nimmt die in Fig. 3 veranschaulichte Stellung ein, in welcher sich das Ende 59 der Schieber 51 an dem Arretierwinkel 34 abstützt, um ein unbeabsichtigtes Einklappen des Kurbelarms 12 zu verhindern. Eine Drehbewegung des Kurbelarms 12 und der Nabe 11 um die Achse 13 wird über die von dem Kupplungshebel 38 und dem Ritzel 18 gebildete Schaltkupplung auf die Antriebswelle 16 und damit auf das Antriebsritzel 64 übertragen. Die Antriebskabel 65 werden unter Mitnahme des Deckels 68 verstellt, ohne daß es zu einem Leerlauf zwischen der Drehbewegung des Kurbelarms 12 und der Drehbewegung des Antriebsritzels 64 kommt. Ist die neue Deckelsollstellung, beispielsweise die Schließstellung gemäß Fig. 11, erreicht, wird durch Druck auf die Handhabe 57 die Arretiereinrichtung 50 gelöst, so daß der Kurbelarm 12 entgegen dem anfänglichen Widerstand der Blattfeder 31 und - nach Überwindung der Totpunktstellung - unterstützt durch die Blattfeder 31 von der Arbeitsstellung in die Ruhestellung eingeklappt werden kann. Dabei ist innerhalb eines erheblichen Teils des Schwenkbereichs des Kurbelarms 12 weder der Kupplungszahn 41 noch der Kupplungszahn 42 des Kupplungshebels 38 mit der Verzahnung 43 des Ritzels 18 in Eingriff. Wenn daher in der neuen Deckelsollstellung der Kurbelknopf 29 nicht ohnehin zufällig mit der Versenknische 72 ausgerichtet ist, kann der Kurbelarm 12 um die Achse 13 frei gedreht werden. Auf diese Weise läßt sich der Kurbelarm 12 in die Stellung drehen, in welcher der Kurbelknopf 29 der Versenknische 72 gegenüberliegt, ohne daß dabei eine Antriebsbewegung auf das Antriebsritzel 64 übertragen wird. Nachdem die gegenseitige Ausrichtung von Kurbelknopf 29 und Versenknische 72 herbeigeführt ist, wird der Kurbelarm 12 in die voll eingeschwenkte Ruhestellung gemäß Fig. 7 gebracht, in welcher die drehfeste Verbindung zwischen Nabe 11 und Antriebswelle 16 über die von dem Kupplungshebel 38 und dem Ritzel 18 gebildete Schaltkupplung wiederhergestellt ist.

Es versteht sich daß das vorstehend näher erläuterte Ausführungsbeispiel in verschiedenartigster Weise abgewandelt werden kann. Beispielsweise können die Antriebswelle und das Ritzel 18 miteinander einstückig verbunden sein, das heißt, die Verzahnung 43 kann an der Antriebswelle selbst ausgebildet sein. Mit der Antriebswelle 16 können anstelle des Ritzels 18 aber auch zwei Ritzel drehfest verbunden sein, von denen das eine mit dem einen und das andere mit dem anderen der beiden Kupplungszähne 41, 42 des Kupplungshebels 38 zusammenwirkt. Anstelle jeweils eines Kupplungszahns 41 bzw. 42 für die drehfeste Verbindung zwischen Kupplungsarm 12 und Antriebswelle 16 in der Arbeitsstellung und in der Ruhestellung des Kupplungsarms können jeweils zwei oder mehr nebeneinanderliegende Kupplungszähne vorgesehen sein. Die Blattfeder 31 kann gegebenenfalls unmittelbar an den Nockenbahnen 37 anliegen.

## Patentansprüche

1. Kurbelantrieb für ein über einen Antriebsmechanismus verstellbares Teil eines Fahrzeugdachs, mit einem Kurbelarm (12), der an einer drehbaren Nabe (11) zwischen einer Arbeitsstellung und einer Ruhestellung verschwenkbar gelagert ist und ein Betätigungselement trägt, das in der Ruhestellung des Kurbelarms (12) in eine dachfeste Versenknische eintaucht, wobei die Nabe (11) mit einer einen Teil des Antriebsmechanismus bildenden Antriebswelle (16) über eine in Abhängigkeit von der Schwenkstellung des Kurbelarms (12) betätigte Schaltkupplung verbunden ist, die sowohl in der Arbeitsstellung als auch in der Ruhestellung des Kurbelarms (12) eine drehfeste Verbindung zwischen der Nabe (11) und der Antriebswelle (16) herstellt und die die Antriebsverbindung zwischen der Nabe (11) und der Antriebswelle (16) unterbricht, wenn der Kurbelarm (12) in eine Freigabestellung gebracht wird, **dadurch gekennzeichnet, daß** die Schaltkupplung ein sowohl Dreh- als auch Schwenkbewegungen des Kurbelarms (12) mitmachendes Kupplungselement (Kupplungshebel 38) aufweist, das sich in der Arbeitsstellung und in der Ruhestellung des Kurbelarms in eine Verzahnung (43) der Antriebswelle (16) oder eines mit der Antriebswelle verbundenen Mitnehmers (Ritzel 18) einlegt und das in Zwischenstellungen des Kurbelarms im Schwenkbereich zwischen der Arbeitsstellung und der Ruhestellung von der Verzahnung freikommt.

2. Kurbelantrieb nach Anspruch 1, dadurch gekennzeichnet, daß das Kupplungselement (Kupplungshebel 38) im Bereich seines einen Endes einen ersten Kupplungszahn (41) und im Bereich seines anderen Endes einen zweiten Kupplungszahn (42) aufweist, von denen der eine in der Arbeitsstellung und der andere in der Ruhestellung des Kupplungsarms (12) mit der Verzahnung (43) zusammenwirken.

3. Kurbelantrieb nach Ansprüchen 1 und 2, dadurch gekennzeichnet, daß beim Verschwenken des Kurbelarms (12) in die betreffende Stellung der eine Kupplungszahn (41) von der einen Stirnseite und/oder der Umfangsseite der Verzahnung (43) her und der andere Kupplungszahn (42) von der anderen Stirnseite oder der Umfangsseite der Verzahnung her in die Verzahnung eintauchen.

4. Kurbelantrieb nach einem der vorhergehenden Ansprüche, dadurch gekennzeichnet, daß der Kurbelarm (12) und das Kupplungselement (Kupplungshebel 38) um eine gemeinsame Achse (24) mit Bezug auf die Nabe (11) verschwenkbar sind.

5. Kurbelantrieb nach Anspruch 3 oder 4, dadurch gekennzeichnet, daß das Kupplungselement (Kupplungshebel 38) in Richtung auf einen Eingriff des in der Ruhestellung des Kupplungshebels (12) wirksamen Kupplungszahns (42) mit der Verzahnung (43) vorgespannt ist.

6. Kurbelantrieb nach einem der Ansprüche 2 bis 5, dadurch gekennzeichnet, daß die Kupplungszähne (41, 42) und/oder die Zähne der Verzahnung (43) jeweils an ihrem einlaufseitigen Ende schneidenartig ausgebildet sind.

7. Kurbelantrieb nach einem der vorhergehenden Ansprüche, gekennzeichnet durch eine mit dem Kurbelarm (12) zusammenwirkende Federvorspanneinrichtung (Blattfeder 31, Nocken 36, Nockenbahn 37), die, nachdem der Kurbelarm in der einen Schwenkrichtung über einen Totpunkt hinaus verschwenkt ist, den Kurbelarm in Richtung auf die Arbeitsstellung federnd vorspannt und die, nachdem der Kurbelarm in der anderen Schwenkrichtung über den Totpunkt hinaus verschwenkt ist, den Kurbelarm in Richtung auf die Ruhestellung federnd vorspannt.

8. Kurbelantrieb nach Anspruch 7, dadurch gekennzeichnet, daß die Federvorspanneinrichtung mindestens eine an der Nabe (11) abgestützte Blattfeder (31) aufweist, die sich selbst oder über ein Zwischenglied (Nocken 36) gegen mindestens eine Nockenbahn (37) des Kurbelarms (12) anlegt und die in der Totpunktstellung des Kurbelarms gegenüber ihrer entspannten Lage maximal ausgelenkt ist.

9. Kurbelantrieb nach einem der vorhergehenden Ansprüche, gekennzeichnet durch eine lösbare Arretiereinrichtung (50) zum Arretieren des Kurbelarms (12) in der Arbeitsstellung.

10. Kurbelantrieb nach Anspruch 9, dadurch gekennzeichnet, daß die Arretiereinrichtung (50) mittels eines nahe dem freien Ende des Kurbelarms (12) angeordneten Freigabehebels (54) lösbar ist.

11. Kurbelantrieb nach Ansprüchen 9 und 10, dadurch gekennzeichnet, daß die Arretiereinrichtung (50) mindestens einen an dem Kurbelarm (12) verstellbar gelagerten Schieber (51) aufweist, der in eine Stellung federnd vorgespannt ist, in der er ein Verschwenken des in die Arbeitsstellung gebrachten Kurbelarms gegenüber der Nabe (11) verhindert, und der mittels des Freigabehebels (54) entgegen der Federvorspannkraft in eine ein Verschwenken des Kurbelarms erlaubende Stellung verstellbar ist.

## Claims

1. A crank drive for a part of a vehicle roof which can be displaced by a driving mechanism, comprising a crank arm (12) which is mounted on a rotatable hub (11) so that it can pivot between a working position and an inoperative position and carries an actuating element which in the inoperative position of the crank (12) is concealed in a niche in the roof, the hub (11) being connected to a drive shaft (16) which constitutes a part of the driving mechanism, via a shift coupling which is actuated as a function of the pivoted position of the crank arm (12) and which both in the working position and also in the inoperative position of the crank arm (12) establishes a rotationally rigid connnected between the hub (11) and the drive shaft (16) and which breaks the driving connection between the hub (11) and the drive shaft (16) when the crank arm (12) is moved into a release position, characterised in that the shift coupling comprises a coupling element (coupling lever 38) which jointly perfoms both rotary and also pivoting movements of the crank arm (12), said coupling element engaging a set of teeth (43) on the drive shaft (16) or on a driving member (pinion 18) which is connected to the drive shaft, both in the working position and also in the inoperative position of the crank arm, being disengaged from the teeth in midway positions of the crank in the pivoting range between the working position and the inoperative position.

2. A crank drive according to Claim 1, characterised in that the coupling element (coupling lever 38) has in the region of one end a first coupling tooth (41) and in the region of its other end a second coupling tooth (42), of which one cooperates with the teeth (43) in the working position and the other in the inoperative position of the coupling arm (12).

3. A crank drive according to Claims 1 and 2, characterised in that upon the crank arm (12) being pivoted into the respective position, the one coupling tooth (41) engages the teeth from one end and/or the peripheral side of the teeth (43) while the other coupling tooth (42) engages the teeth from the other end face or peripheral side of the teeth.

4. A crank drive according to one of the preceding Claims, characterised in that the crank arm (12) and the coupling element (coupling lever 38), are pivotable about a common axis (24) in relation to the hub (11).

5. A crank drive according to Claim 3 or 4, characterised in that the coupling element (coupling lever 38) is initially tensioned in the direction of engagement with the teeth (43) of the coupling tooth (42) which is effective in the inoperative position of the coupling lever (12).

6. A crank drive according to one of Claims 2 to 5, characterised in that the coupling teeth (41, 42) and/or the teeth of the set of teeth (43) are constructed as sharp edges on their inlet end.

7. A crank drive according to one of the preceding Claims, characterised by, cooperating with the crank arm (12) a spring pre-tensioning device (leaf spring 31, cam 36, cam path 37) which, once the crank arm has been pivoted beyond the dead centre point in one pivoting direction, initially and resiliently pre-tensions the crank arm in the direction of the working position and which, once the crank arm has been pivoted beyond the dead centre point in the other pivoting direction, resiliently pre-tensions the crank arm in the direction of the inoperative position.

8. A crank drive according to Claim 7, characterised in that the spring pre-tensioning means comprises at least one leaf spring (31) biased on the hub (11) and which bears against at least one cam path (37) of the crank arm (12) either itself or via an intermediate member (cam 36) and which in the dead centre position of the crank arm is deflected to the maximum in respect of its relaxed position.

9. A crank drive according to one of the preceding Claims, characterised by a separable locking device (50) for locking the crank arm (12) in the working position.

10. A crank drive according to Claim 9, characterised in that the locking device (50) can be released by means of a release lever (54) disposed close to the free end of the crank arm (12).

11. A crank drive according to Claims 9 and 10, characterised in that the locking device (50) comprises at least one slider (51) mounted for displacement on the crank arm (12) and which is resiliently pre-tensioned in a position in which it prevents a pivoting of the crank arm which has been brought into the working position in relation to the hub (11) and which can be displaced by means of the release lever (54) against the initial spring tension into a position which allows pivoting of the crank arm.

## Revendications

1. Commande à manivelle pour une partie réglable par l'intermédiaire d'un mécanisme d'entraînement d'un toit de véhicule, comportant un bras de manivelle (12), qui est monté en pouvant basculer sur un moyeu (11) mobile autour d'un axe, entre une position de travail et une position de repos et porte un élément de commande, qui s'enfonce dans la position de repos du bras de manivelle (12) dans une niche escamotable solidaire du toit, le moyeu (11) étant lié par un arbre de commande (16) constituant une partie du mécanisme d'entraînement par l'intermédiaire d'un embrayage actionné en fonction de la position de pivotement du bras de manivelle (12), embrayage qui procure aussi bien dans la position de travail que dans la position de repos du bras de manivelle (12) un assemblage solidaire en rotation entre le moyeu (11) et l'arbre de commande (16) et qui interrompt la liaison d'entraînement entre le moyeu (11) et l'arbre de commande (16), quand le bras de manivelle (12) est amené dans une position de libération, caractérisée en ce que l'embrayage comporte un élément d'accouplement (levier d'accouplement 38) participant aussi bien aux mouvements de rotation que de basculement du bras de manivelle (12), élément qui s'insère dans la position de travail et dans la position de repos du bras de manivelle dans une denture (43) de l'arbre de commande (16) ou d'un toc d'entraînement (pignon 18) solidaire de l'arbre de commande et qui se libère de la denture dans des positions intermédiaires de l'arbre de manivelle dans le secteur de basculement entre la position de travail et la position de repos.

2. Commande à manivelle selon la revendication 1, caractérisée en ce que l'élément d'accouplement (levier d'accouplement 38) comporte au niveau d'une de ses extrémités une première dent d'accouplement (41) et au niveau de son autre extrémité une deuxième dent d'accouplement (42), dont la première coopère dans la position de travail et l'autre dans la position de repos du bras d'accouplement (12) avec la denture (43).

3. Commande à manivelle selon les revendications 1 et 2, caractérisée en ce que lors du basculement du bras de manivelle (12) dans la position concernée l'une des dents de couplage (41) pénètre dans la denture depuis la face frontale et/ou la face périphérique de la denture (43) et l'autre dent d'accouplement (42) depuis l'autre face frontale ou la face périphérique de la denture.

4. Commande à manivelle selon une des revendications précédentes, caractérisée en ce que le bras de manivelle (12) et l'élément d'accouplement (levier d'accouplement 38) peuvent basculer autour d'un axe commun (24) avec référence au moyeu (11).

5. Commande à manivelle selon les revendications 3 ou 4, caractérisée en ce que l'élément d'accouplement (levier d'accouplement 38) est mis en précontrainte dans le sens d'un engagement avec la denture (43), de la dent d'accouplement (42) agissant dans la position de repos du levier d'accouplement (12).

6. Commande à manivelle selon une des revendications 2 à 5, caractérisée en ce que les dents d'accouplement (41, 42) et/ou les dents de la denture (43) sont réalisées respectivement en arête à leur extrémité du côté engagement.

7. Commande à manivelle selon une des revendications précédentes, caractérisée par un dispositif de précontrainte à ressort (ressort à lames (31), came (36), piste de came (37)) coopérant avec le bras de manivelle (12), dispositif qui, après que le bras de manivelle a basculé dans l'un des sens de pivotement au-delà d'un point mort, met en précontrainte élastiquement le bras de manivelle dans le sens de la position de travail et qui, après que le bras de manivelle a basculé dans l'autre sens de pivotement au-delà du point mort, met en précontrainte élastiquement le bras de manivelle dans le sens de la position de repos.

8. Commande de manivelle selon la revendication 7, caractérisée en ce que le dispositif de précontrainte à ressort comporte au moins un ressort à lames (31) appuyé sur le moyeu (11), qui s'applique lui-même ou par l'intermédiaire d'une pièce intermédiaire (came 36) contre au moins une piste de came (37) du bras de manivelle (12) et qui est dévié au maximum dans la position de point mort du bras de manivelle par rapport à sa position de détente.

9. Commande de manivelle selon une des revendications précédentes, caractérisée par un mécanisme d'arrêt (50) détachable pour bloquer le bras de manivelle (12) dans la position de travail.

10. Commande de manivelle selon la revendication 9, caractérisée en ce que le mécanisme d'arrêt (50) peut être détaché au moyen d'un levier de déverrouillage (54) placé au voisinage de l'extrémité libre du bras de manivelle (12).

11. Commande de manivelle selon les revendications 9 ou 10, caractérisée en ce que le mécanisme (50) comprend au moins une barre (51) montée mobile contre le bras de manivelle (12), qui est mise en précontrainte par ressort dans une position, dans laquelle elle empêche un pivotement du bras de manivelle amené en position de travail par rapport au moyeu (11), et qui peut être repliée au moyen du levier de déverrouillage (54) à l'encontre de la force de précontrainte du ressort dans une position permettant un basculement du bras de manivelle.
